# FASCICULE DE BREVET EUROPEEN

(11) **EP 1 247 741 B1**
(45) Date de publication et mention de la délivrance du brevet: **21.01.2004**
(21) Numéro de dépôt: 02290782.8
(22) Date de dépôt: 28.03.2002
(51) Int. Cl.: B64G 1/50

(54) **Radiateur déployable pour engin spatial**
Ausklappbarer Radiator für Raumfahrzeug
Deployable radiator for spacecraft

(30) Priorité: 05.04.2001 FR 0104642
(43) Date de publication de la demande: 09.10.2002
(73) Titulaire: ALCATEL, 75008 Paris (FR)
(72) Inventeur: Bertheux, Philippe, 31450 Belbeze de Lauragais (FR); Texier, Emmanuel, 06150 Cannes La Bocca (FR); Jacqué, Bernard, 31000 Toulouse (FR); Seguin, Jean-Marie, 31000 Toulouse (FR)
(74) Mandataire: Smith, Bradford Lee

(56) Documents cités:
- EP-A- 0 780 304
- WO-A-99/19212
- US-A- 5 927 654
- PATENT ABSTRACTS OF JAPAN vol. 015, no. 310 (M-1144), 8 août 1991 (1991-08-08) -& JP 03 114999 A (TOSHIBA CORP), 16 mai 1991 (1991-05-16)

## Description

Le domaine technique de l'invention concerne les engins spatiaux tels des satellites et des sondes ayant des charges utiles électroniques ou optiques. De tels engins sont typiquement dotés de moyens de génération, de stockage et de distribution de la puissance électrique pour alimenter l'ensemble des électroniques embarquées. Ces équipements électroniques en fonctionnement dissipent selon leur efficacité électrique propre une partie de l'énergie électrique consommée en chaleur. Cette chaleur doit être répartie et acheminée par conduction puis doit être évacuée de l'engin spatial vers le vide spatial par radiation. L'invention concerne des engins spatiaux comprenant des radiateurs de chaleur pour remplir cette fonction.

On connaît plusieurs configurations de radiateurs fixes ou déployables dont les dimensions évoluent avec la taille et les puissances électriques des satellites. Une tendance actuelle des satellites de télécommunicationsest d'avoir des dimensions de plus en plus grandes, ainsi que des générateurs de puissance de plus en plus puissants, d'où un besoin croissant de surfaces radiantes à bord des satellites.

Un radiateur est plus efficace s'il n'est pas éclairé par le soleil ; ainsi, pour les satellites géostationnaires, les radiateurs fixes sont généralement installés de préférence sur les panneaux de la structure du satellite exposés vers le Nord et le Sud lorsque le satellite est à sa position orbitale opérationnelle et que le corps du satellite est orienté de manière à aligner les antennes vers la surface terrestre.

Les radiateurs déployables sont utilisés quand les surfaces fixes inhérente à la structure du satellite ne sont pas suffisantes pour évacuer toute la chaleur générée à bord. Les radiateurs déployables, comme les autres structures déployables telles les générateurs solaires, les réflecteurs d'antennes, et cetera, sont repliés contre la structure fixe du satellite afin de s'inscrire dans le volume disponible sous la coiffe du lanceur. Après le lancement, le satellite se sépare du lanceur après éjection de la coiffe du lanceur, et les différentes structures déployables sont déployées au fur et mesure des besoins de la mission par des mécanismes de déploiement spécifiquement adaptés selon chaque cas.

Lors du lancement d'un satellite géostationnaire, la fusée de lancement amène typiquement le satellite sur une orbite d'injection dite de transfert ou «GTO », acronyme anglophone pour « Geostationary Transfer Orbit ».

Ensuite, des moyens de propulsion embarqués sur un satellite géostationnaire permettent de le transférer à partir de l'orbite d'injection vers sa position orbitale finale sur l'arc géostationnaire dit « GEO », acronyme anglophone pour « Geostationary Earth Orbit ».

Ces moyens de propulsion sont, à l'heure actuelle, le plus souvent constitués d'un ou plusieurs moteurs à combustion chimique intégrés au satellite.

Dans une génération future de satellites, afin d'augmenter la capacité et la durée de vie du satellite, il est envisagé de généraliser l'utilisation des moteurs électriques pour la mise à poste et/ou le maintien à poste des satellites. Un tel moteur est alimenté par l'énergie renouvelable, à savoir l'électricité récoltée par les générateurs solaires, ce qui permet de limiter les inconvénients des carburants chimiques embarqués, tels leur masse et leur encombrement de stockage.

Donc une nouvelle génération de satellites à propulsion électrique est en voie de conception et de réalisation. En ce qui concerne le séquencement de la mise à poste, c'est à dire le transfert depuis son orbite d'injection vers la position orbitale définitive sur l'orbite géostationnaire , plusieurs options sont possibles.

Il faut, dans le cas de l'utilisation de la propulsion électrique pour le transfert ou une partie de celui-ci, récolter de l'énergie solaire pour la convertir en énergie électrique pour alimenter les moteurs électriques. Ceci peut être réalisé par un déploiement partiel ou total des générateurs solaires du satellite. Ou bien, dans d'autres scénarios, le satellite pourrait effectuer son trajet entre son orbite d'injection et l'orbite géostationnaire ou une partie de ce trajet avec de l'énergie embarquée au lancement, soit chimique, soit électrochimique (batteries) voire nucléaire.

Dans tous les cas, l'énergie disponible pour le transfert est limitée par les moyens de récolte ou de stockage qui devront être dimensionnés au plus juste.

Donc dans tous les cas, l'énergie disponible étant dimensionnée au plus près, il ne faut pas la gaspiller dans la mesure du possible lors de la phase de transfert.

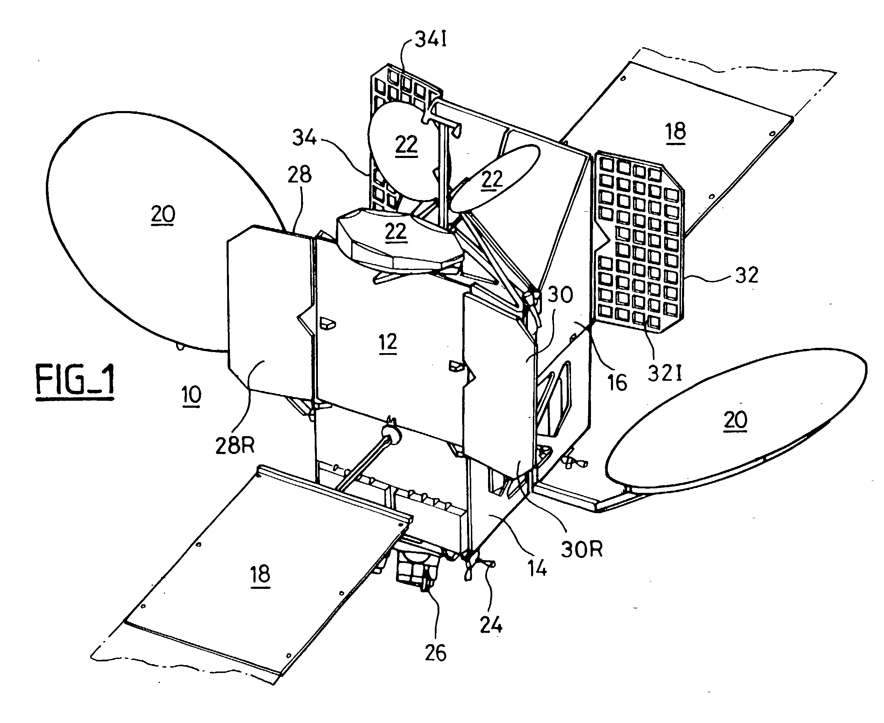

Il est connu par le document D1 = EP 0 780 304 A1 un engin spatial comprenant des radiateurs déployables, chacun ayant deux surfaces essentiellement parallèles, dont une première face radiante et une deuxième face opposée isolante, de manière à ce que, lors de la phase de transfert GTO vers GEO, les radiateurs déployables sont en position stockée, plaqués contre la structure du satellite, avec les faces radiantes orientées vers la structure du satellite, et les faces isolantes vers le vide de l'espace, afin de réduire les besoins de chauffage à bord lors de cette phase, et ainsi, d'économiser l'énergie à bord. Ce système est illustré dans la figure 1 et sera décrit plus en détail ci-après.

D'autres engins spatiaux avec systèmes de radiateurs déployables sont connus de l'art antérieur, par exemple par le document D2 = WO 99/19212, dont l'enseignement sera décrit à l'aide de la figure 2 de la présente demande. Ici, il s'agit de radiateurs déployables ayant les deux faces radiantes.

Les radiateurs déployables du document D1 sont très efficaces pour l'isolation thermique pendant la phase de transfert vers l'orbite géostationnaire à partir de l'orbite d'injection. En revanche, leur efficacité en tant que radiateurs thermiques une fois mis à poste en orbite géostationnaire est compromis par le fait que la moitié environ de la surface disponible est isolante et non pas radiante.

Les radiateurs déployables du document D2 sont radiantes sur les deux faces entièrement, mais n'assurent aucune isolation thermique pendant la phase de transfert.

Les engins spatiaux selon l'invention permettent de pallier les inconvénients de l'art antérieur. A ces fins, l'invention propose un engin spatial comprenant au moins un radiateur déployable ayant une position stocké avant déploiement et une position déployée opérationnelle après déploiement ledit radiateur ayant deux faces principales, dont une première face qui est stockée vers l'engin, et une deuxième face opposée qui est orientée vers l'espace en position stockée ; ladite première face étant radiante au moins pour la majeur partie de sa surface ; au moins une partie de ladite deuxième face étant thermiquement isolante; **caractérisé en ce qu'**une partie importante de ladite deuxième face est thermiquement radiante, cette partie étant substantiellement cachée, avant le déploiement dudit radiateur, par d'autres éléments dudit engin spatial faisant écran lors du lancement et d'au moins une partie du trajet de transfert dudit engin vers sa position orbitale sur l'orbite géostationnaire.

Selon une caractéristique avantageuse, ledit radiateur déployable est relié à la structure de l'engin par un mécanisme de maintien et de déploiement ayant une charnière et un axe de charnière ; **caractérisé en ce que** ledit axe est positionné avec un angle éventuellement non nul par rapport aux axes principaux de la structure dudit engin. Selon une réalisation particulière, ladite charnière est fixée sur une partie dudit engin spatial dite « module de communication », module dédié principalement aux équipements embarqués de la charge utile. Selon une réalisation alternative, ladite charnière est fixée sur une partie dudit engin spatial dite « module de service », module dédié principalement aux équipements embarqués de la plate-forme qui sont en support aux bons fonctionnement des équipements de la charge utile.

Selon une réalisation préférée, ledit radiateur possède, en position déployée établie, au moins un degré de liberté autour d'au moins un axe. Selon une autre réalisation, ledit radiateur possède, en position déployée établie, au moins deux degrés de liberté autour d'au moins deux axes. Selon une réalisation particulière, l'axe principal dudit radiateur en position déployée n'est pas parallèle à un axe principale dudit engin. Selon une autre réalisation particulière, le plan principal dudit radiateur en position déployée n'est pas parallèle à un plan principale dudit engin.

D'autres caractéristiques et avantages de l'invention et de ses principales variantes apparaîtront à la lecture de la description détaillée qui suit, faite à l'aide de ses figures annexées, dont
- La figure 1, déjà évoquée, qui montre des radiateurs déployables connus de l'art antérieur, ayant une face thermiquement isolante ;
- La figure 2, déjà évoquée, qui montre des radiateurs déployables connus de l'art antérieur, ayant les deux faces entièrement radiantes ;
- Les figures 3a et 3b, qui montrent schématiquement et en plan une première réalisation de radiateurs déployables selon l'invention, en position stockée contre la structure de l'engin spatial dans la figure 3a, et déployés dans la figure 3b;
- Les figures 4a et 4b, qui montrent deux vues en perspective d'un engin spatial doté de radiateurs déployables selon la figure 3, mais en position déployée ;
- La figure 5, qui montre une autre réalisation d'un radiateur déployable selon l'invention, en position stockée ;
- La figure 6, qui montre le radiateur déployable de la figure 5 en position déployée, et son rapport avec le champ de vue d'un instrument embarqué ;
- La figure 7, qui montre le radiateur déployable de la figure 5 en position déployée, et son rapport avec les jet des tuyères de propulsion chimiques de l'engin ;
- Les figures 8a et 8b, qui montrent deux radiateurs déployables de la figure 5 en position déployée, en perspective selon deux directions de vue différentes, et leur rapport avec les antennes de mission ;
- La figure 9 montrent l'évolution d'un engin tel que celui des figures 8a et 8b sur son orbite autour de la terre ;
- La figure 10 montre un mécanisme permettant la rotation autour de deux axes.

Sur toutes les figures, les mêmes références se référent aux mêmes éléments. L'échelle n'est pas toujours respectée pour des raisons de clarté et de lisibilité.

La figure 1 montre un satellite 10 connu de l'art antérieur par le document D1. Le satellite 10 est composé principalement d'un module de service 14 et d'une module de communication 16. Des radiateurs déployables 28, 30, 32, 34 sont montrés en position déployée.

La chaleur à évacuer, provenant des équipements fixés au sein de la structure 12 du satellite 10, est conduite vers les radiateurs via des caloducs (non montrés) ayant une partie souple au niveau de la ou les charnière(s) de fixation des radiateurs déployables sur la structure 12 du satellite.

Différents équipements de propulsion sont prévus pour manoeuvrer la position du satellite, aussi bien lors des phases de transfert du satellite d'une orbite vers une autre, que pendant la mission du satellite afin d'assurer le maintien à poste. Sur la figure 1 sont représentés deux paires de deux moteurs 24 à propulsion chimique sur les extrémités du panneau « anti-terre » du module de service 14, ainsi qu'une paire de moteurs électrique à propulsion ionique 26. Plusieurs moteurs des deux types sont prévus, mais ne sont pas tous visibles sur cette figure à cause de la perspective. Il peut aussi avoir un gros moteur central (non montré) à combustion d'ergols liquide ou à poudre, pour le transfert de l'orbite d'injection vers l'orbite géostationnaire.

Sur cette figure 1, on voit d'autres équipements déployés tels les panneaux solaires 18 et les grands réflecteurs d'antennes 20. Dans l'exemple de la figure 1, les grands réflecteurs 20 sont en regard des réflecteurs primaires 22, eux mêmes en regard des sources primaires d'antennes.

A retenir sur cette figure 1, pour une meilleure appréciation de l'invention, sont les natures différentes des deux faces de chaque radiateur déployable. En effet, chaque radiateur déployable 28, 30, 32, 34 de cet exemple de l'art antérieur a une première face radiante indiquée par le repère « R » et une deuxième face opposée isolante indiquée par le repère « I » suivant le repère numérique (28, 30, 32, 34) de chaque radiateur, par exemple 28R, 30R, 321, 341. Les propriétés radiantes et isolantes sont obtenues de manière classique à l'aide de revêtements bien connus de l'homme de l'art, par exemple des couches multiples d'isolation (MLI, acronyme anglophone pour « multi-layer insulation ») sur la face isolante ; et des revêtements réfléchissants et radiants sur les faces radiantes (OSR, acronyme anglophone pour « optical solar reflector »).

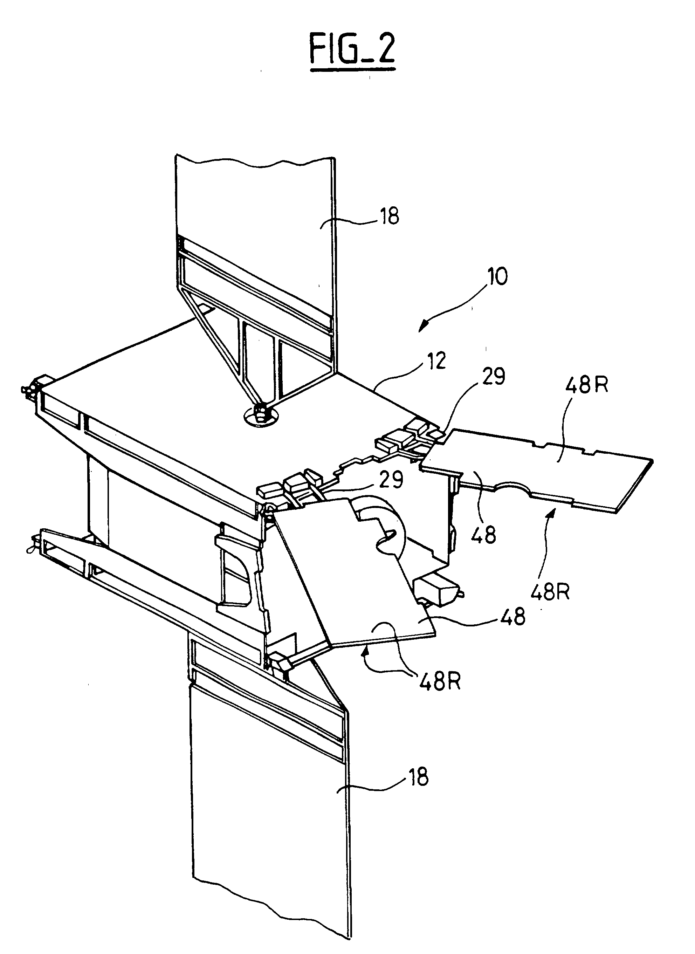

L'engin spatial 10 de l'art antérieur enseigné par le document D2 et montré sur la figure 2 comprend une structure 12, ayant des panneaux solaires 18 et des radiateurs déployables 48 qui sont reliés à la structure 12 de l'engin 10 par un mécanisme de déploiement ayant une charnière 29 et un axe de charnière, ledit axe étant positionné avec un angle non nul par rapport aux axes principaux de la structure 12 dudit engin 10. Comme indiqué sur cette figure 2, les deux faces des radiateurs déployables sont radiantes et sont signalées comme telles par le repère « R » sur les deux faces, suivant le repère 48 pour les radiateurs. Une fois déployé, le plan principal des radiateurs est dans le plan des faces fixe orientée Nord ou Sud du satellite, l'axe principal du radiateur présentant un angle non nul avec l'axe satellite-terre.

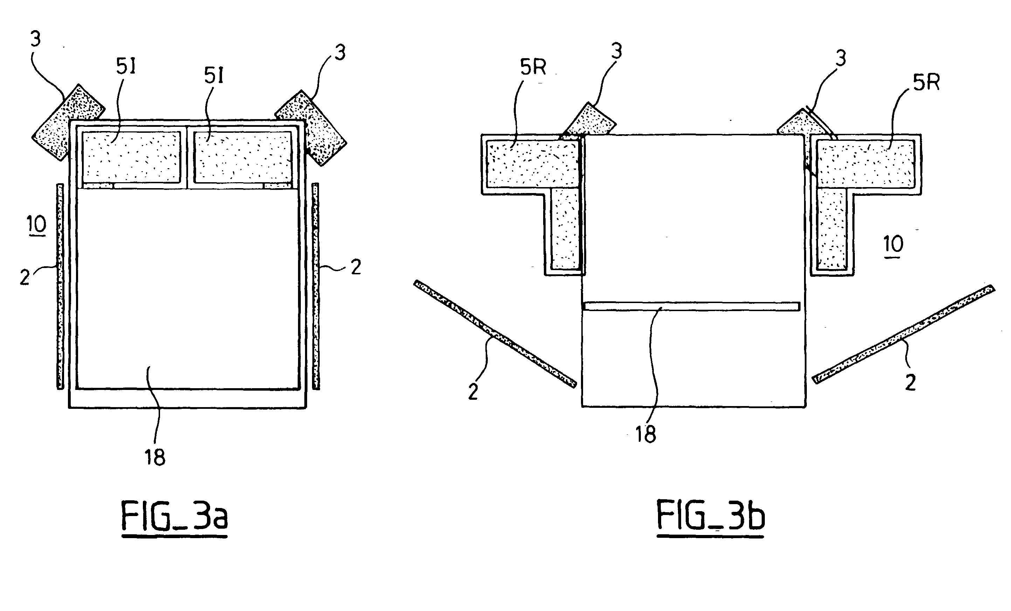

La figure 3a montre schématiquement et en plan une première réalisation selon l'invention d'un radiateur déployable 5 pour engin spatial 10 en position stockée. Les réflecteurs d'antennes 2 sont repliés contre la caisse du satellite, sur les panneaux est et ouest. Les sources d'antennes 3 sont visibles en haut de la figure, qui est la face terre par convention. Les radiateurs déployables 5 sont repliés, dans cet exemple, contre les faces nord et sud du satellite 10. Dans l'exemple de réalisation sur ces figures 3a et 3b, ces radiateurs déployables sont partiellement cachés par des panneaux solaires 18, eux même repliés contre le satellite en position de stockage. Une partie de ces radiateurs déployables 5, qui n'est pas cachée par un autre équipement déployable, est isolante et ceci est indiquée par le repère « I » suivant le repère « 5 » pour « isolant ». La partie cachée, quant à elle, est radiante, mais non-visible sur ce dessin en position de stockage.

La figure 3b montre le même engin que la figure 3a, mais en position déployée. On voit les panneaux solaires 18 selon leurs tranches dans cette vue. Quand la normale aux panneaux est quasi perpendiculaire à la direction terre - satellite, les radiateurs 5 peuvent être déployés. On voit que ces radiateurs possèdent une face entièrement radiante, portant le repère « R » suivant le repère « 5 ».

On comprend aisément l'avantage principal de l'invention par rapport a l'art antérieur de la figure 1, car selon l'enseignement du document D1, pour une surface de radiateur déployable donnée, la moitié de la surface dudit radiateur est isolante, et donc seulement la moitié est radiante ; tandis qu'un radiateur déployable selon l'invention peut avoir une surface radiante beaucoup plus grande que la moitié. Le radiateur de l'invention est donc plus performant, a surface égale, pour évacuer la chaleur que le radiateur du document D1.

On comprend aisément l'avantage principal de l'invention par rapport a l'art antérieur de la figure 2, car les radiateurs déployables du document D2 sont entièrement radiantes sur les deux faces. Ceci veut dire que pendant la phase de lancement et de transfert, l'engin est exposé au froid de l'espace sans isolation. Une partie de l'énergie de bord devra donc être consacrée au chauffage de l'engin lors de son trajet de transfert, au dépens de l'énergie nécessaire pour la mise en oeuvre entre autre de certains moyens propulsifs nécessaire au transfert.

L'invention permet donc d'optimiser simultanément l'utilisation d'énergie de bord lors de la phase de transfert, ainsi que les capacités radiantes des radiateurs déployés une fois que l'engin sera à poste, et pour toute la durée de sa mission.

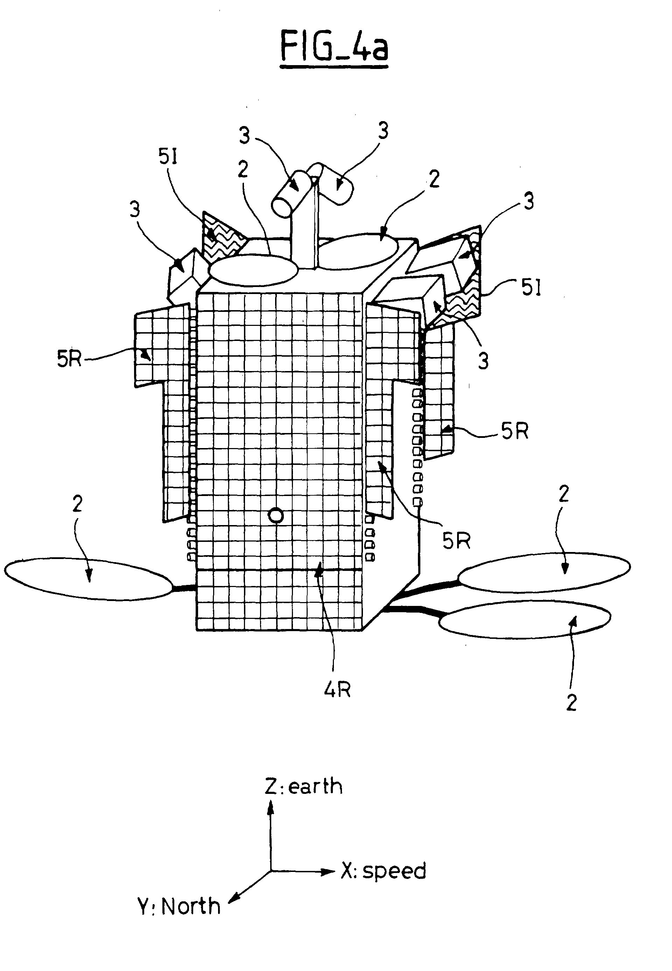

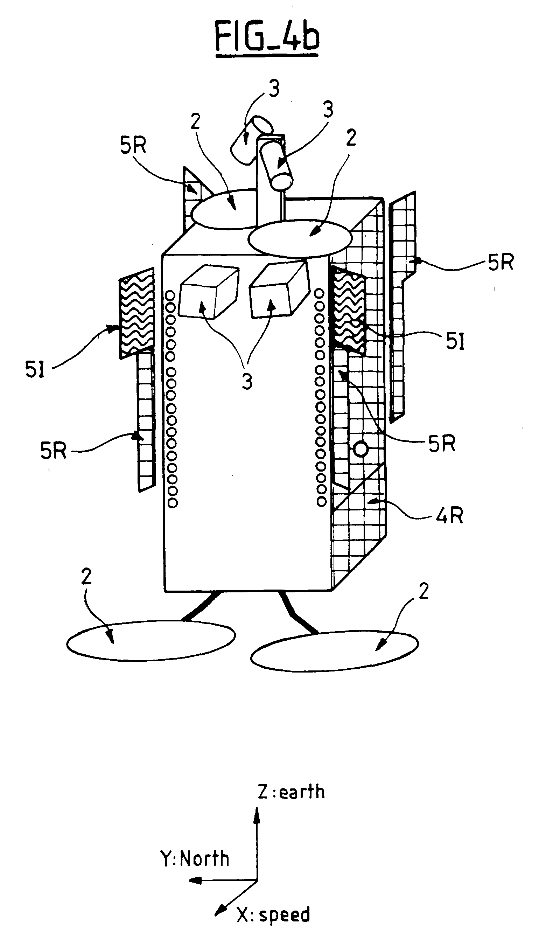

Les figures 4a et 4b montrent schématiquement le même satellite que les figures 3a et 3b, mais en perspective. Sur la figure 4a, on regarde la face nord du satellite, et sur la figure 4b, on regarde la face est. On voit les mêmes éléments sur les deux figures : les sources d'antennes 3, les réflecteurs d'antennes 2, les radiateurs fixes 4R, et les radiateurs déployables 5, avec une première face entièrement radiante 5R, qui sera repliée contre le radiateur fixe 4R en position stockée, et une deuxième face dont une partie 51 est isolante, et une deuxième partie importante 5R est thermiquement radiante. Lors de la phase de transfert orbital, cette deuxième partie radiante 5R de la deuxième face dudit radiateur sera cachée par un autre équipement déployable, par exemple par les panneaux solaires (non-montrés), ou encore par des réflecteurs d'antennes déployables, ou tout autre équipement qui n'aurait pas besoin d'être déployé pendant la phase de transfert.

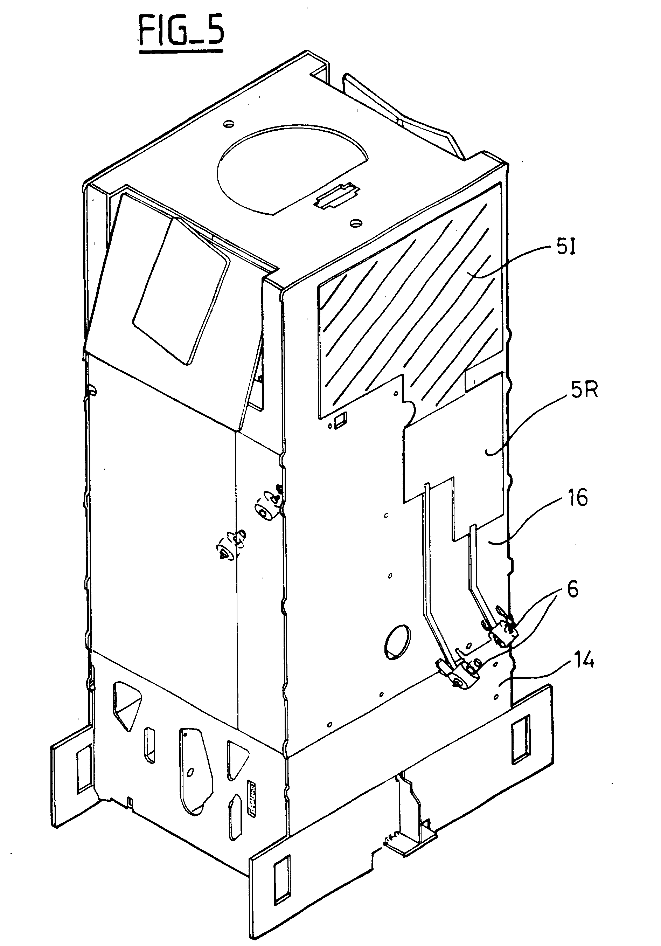

La figure 5 montre un autre exemple de réalisation d'un radiateur déployable selon l'invention, en position stockée. On voit ici un radiateur plus grand que dans les figures précédents, mais ayant les mêmes caractéristiques Une première face radiante, non-visible sur ce dessin, est plaquée contre la face nord du module de communication 16. La deuxième face du radiateur comprend une première partie 51 thermiquement isolante et une deuxième partie thermiquement radiante 5R, cette deuxième partie radiante étant substantiellement cachée par d'autres éléments déployables (non montrés) faisant écran lors du trajet de transfert de l'engin. Le radiateur est relié au module de communication 16 par une charnière 6 ayant un axe de charnière. Comme il est montré sur le dessin, l'axe de charnière est positionné avec un angle non nul par rapport aux axes principaux de l'engin. L'angle non-nul permet de positionner le radiateur, en position déployé, en dehors du champ de vue des capteurs, en dehors des trajets des jets chimiques ou ioniques des propulseurs, et le cas échéant, en dehors des champs de radiation des antennes, de leurs réflecteurs et de leurs sources. Cet agencement est montré plus explicitement sur les figures suivantes.

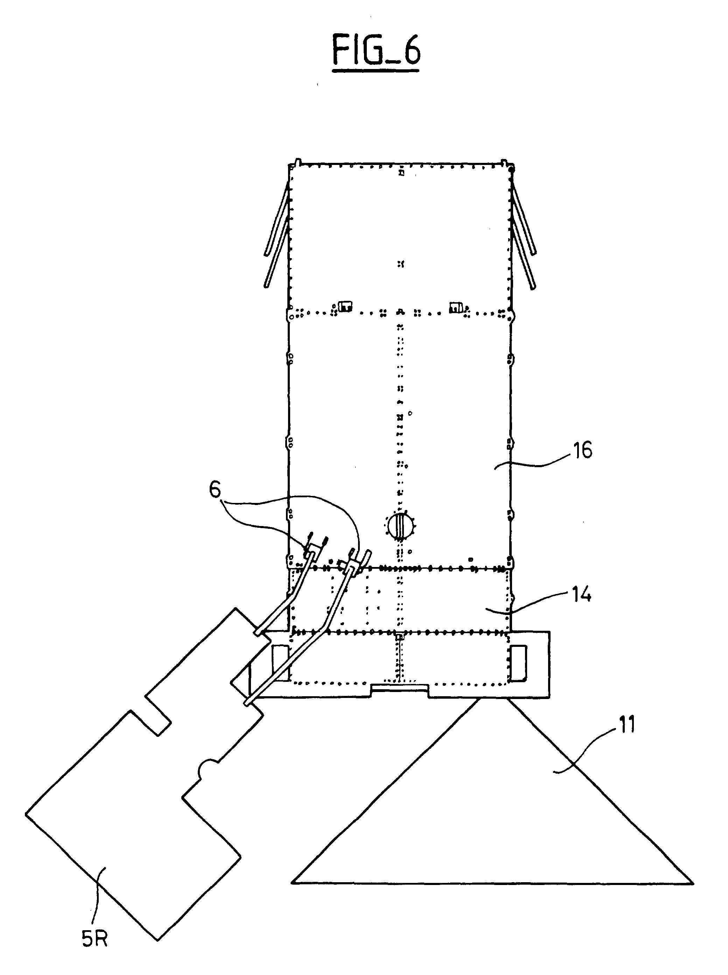

La figure 6 montre schématiquement et en plan le radiateur déployable 5R de la figure 5, en position déployée. La charnière 6 est montée sur le module de communication 16, et l'axe de la charnière 6 est positionnée avec un angle non-nul par rapport aux axes principaux de l'engin. Le champ de vue d'un capteur est indiqué sur le dessin avec le repère 11. Il s'agit par exemple d'un capteur de position, tel un senseur d'étoile. On voit que le positionnement de l'axe de charnière avec un angle non-nul par rapport aux axes principaux de l'engin permet le déploiement du radiateur en dehors du champ de vue 11 du capteur de position. Un déploiement amenant le plan principal du radiateur à une position le placant de manière non collinéaire avec les plans fixes des faces Nord Sud du satellite contribue aussi à cette tache.

Par ailleurs, pour faciliter l'industrialisation en nombre des engins comportant des radiateurs déployables selon l'invention, il est souhaitable de concevoir l'engin avec la modularité de ces composants, par exemple un module de service 14, et un module de communication 16. Dans le cas le plus souvent rencontré, les sources de chaleur à bord seront concentrées dans le module de communication 16 ; il est donc logique de prévoir de fixer la charnière 6 sur ce module de communication 16, et de prévoir la conduction de chaleur depuis le module de communication vers le radiateur déployable via un ou plusieurs caloducs souples ou boucles fluides (non-montrés) au niveau de la charnière 6.

Dans une autre réalisation, non-montrée, on pourrait préférer de fixer la charnière 6 sur le module de service 14, qui pourrait être de la même conception pour toute une variété de modules de communication différents dans une gamme de satellites.

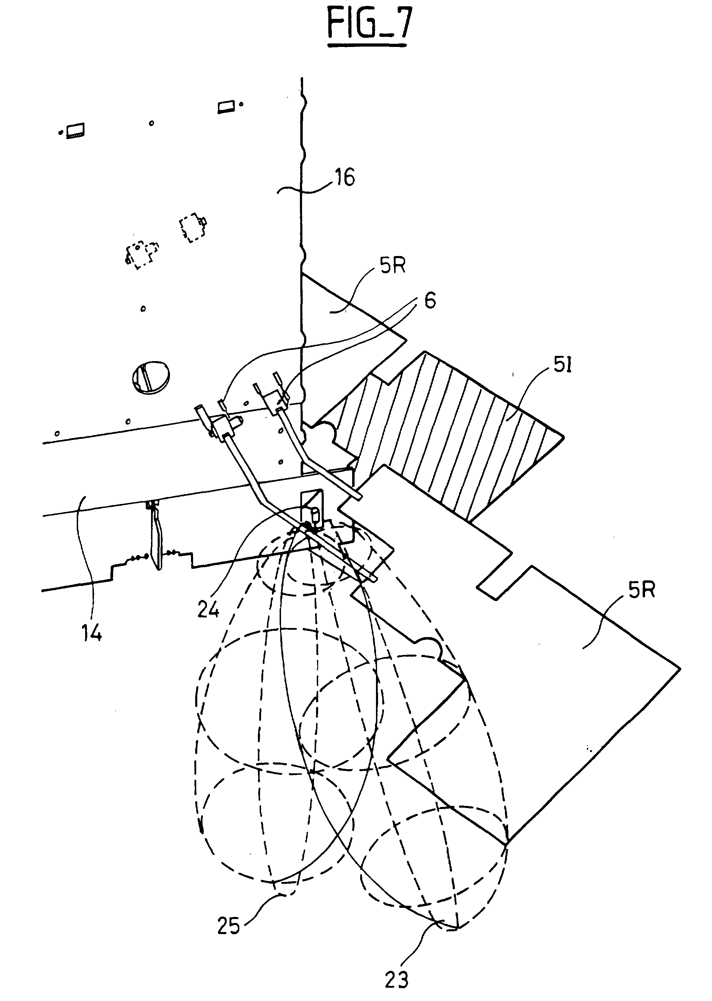

La figure 7 montre schématiquement un détail de radiateurs déployables, en position déployée, du coté anti-terre de l'engin. Ici on voit, en premier plan, la face radiante 5R d'un premier radiateur déployable autour des charnières 6 sur la face est ou ouest de l'engin, comme dans l'exemple de la figure 6, avec un axe des charnières positionné avec un angle non-nul par rapport aux axes principaux de l'engin, et une partie d'un deuxième radiateur déployable fixé sur la face opposée de l'engin (nord ou sud respectivement) ce deuxième radiateur présentant une partie isolante 5l et une partie radiante 5R, telle que vue sur cette figure 7. Sur cette figure on voit également les enveloppes de trajets 23 et 25 des effluents des jets chimiques d'un propulseur 24. On constate que la forme du radiateur 5R, ainsi que le positionnement de ce dernier en position déployé par rapport à l'engin, permet d'éviter la réception sur le radiateur des produits de combustion.

Sur cette figure 7, le jet 23 est représenté en volume, et l'on voit sa relation géométrique avec le radiateur. Ce jet ne peux être totalement évité par le radiateur que si un plan principal dudit radiateur, en position déployée, qui n'est pas parallèle avec un plan principal dudit engin, tel que montré sur cette figure 7.

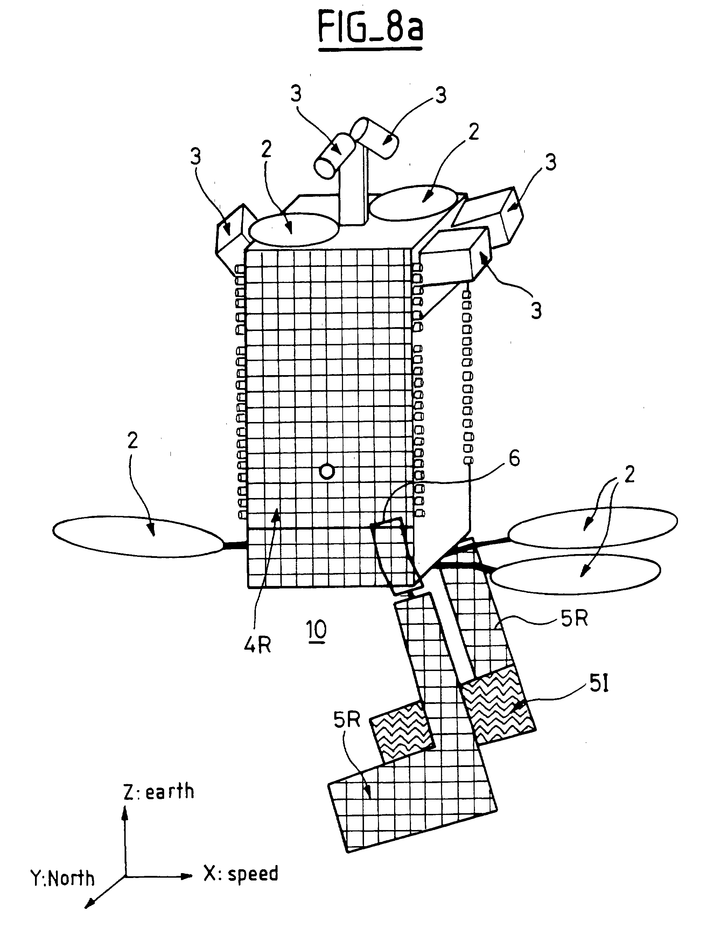

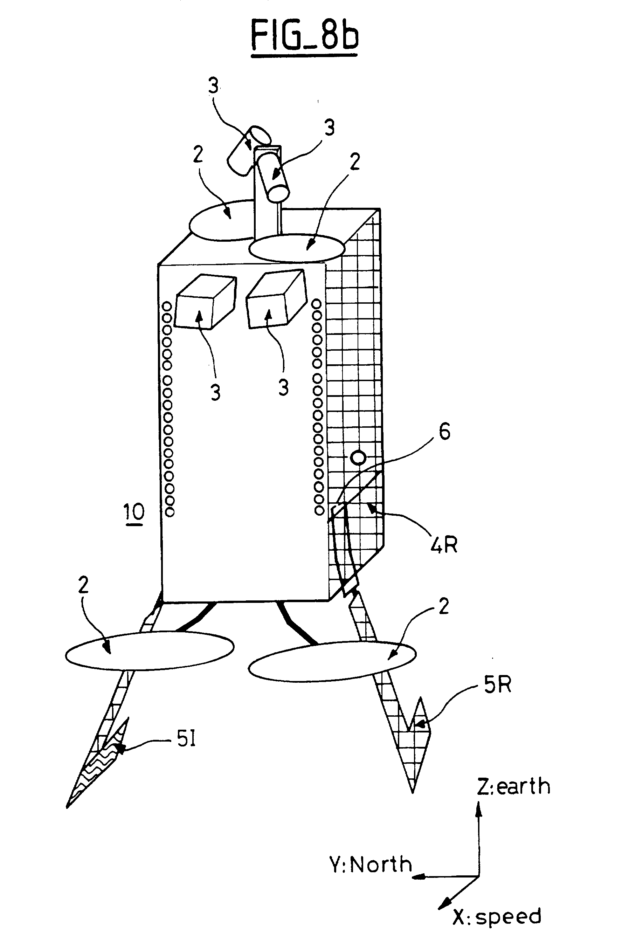

Les figures 8a et 8b montrent schématiquement et en perspective, respectivement vue face nord et face est, un satellite ayant des radiateurs déployables tels que montrés sur les figures 5, 6, et 7, avec ces radiateurs en position déployée. Tous les repères étant identiques avec ceux des figures précédentes, la description détaillée ne sera pas répétée ici. On remarque notamment sur la figure 8b que les plans principaux des radiateurs en position déployée ne sont pas parallèles aux plans principaux de l'engin, pour les raisons déjà évoquées ci-dessus.

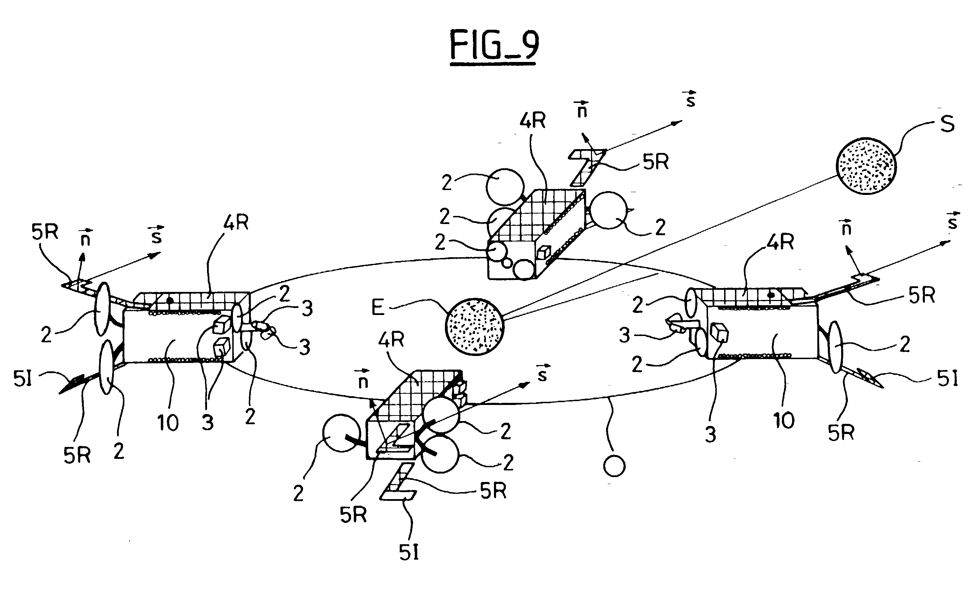

La figure 9 montrent l'évolution d'un engin 10 tel que celui des figures 8a et 8b sur son orbite O autour de la terre E. On voit que le soleil S n'est pas dans le plan de l'orbite géostationnaire O de l'engin 10 autour de la terre E. Ceci aura pour résultat que l'angle des rayons solaires qui tombent sur le satellite 10 et donc sur ces radiateurs 5R varie en fonction de la position de l'engin 10 sur l'orbite O et de la saison.

L'efficacité d'un radiateur est d'autant plus grande que son ensoleillement, et donc l'absorption d'énergie solaire, est faible. L'absorption de l'énergie solaire varie en fonction de l'angle des rayons solaires incidents avec la surface radiante 4R, 5R. Cette variation peut être exprimée comme une fonction du produit scalaire n.s d'un vecteur n normal à la surface radiante 5R et un vecteur s parallèle aux rayons solaires. Avec une motorisation d'un radiateur déployable autour d'au moins un axe de rotation, on peut minimiser ce produit scalaire n.s et ainsi minimiser l'absorption de l'énergie solaire par ce radiateur et donc optimiser son efficacité de rejet thermique. Avec une motorisation d'un radiateur déployable autour d'au moins deux axes, on peut faire en sorte que le produit scalaire n.s soit maintenu nul, pour une efficacité maximale du radiateur.

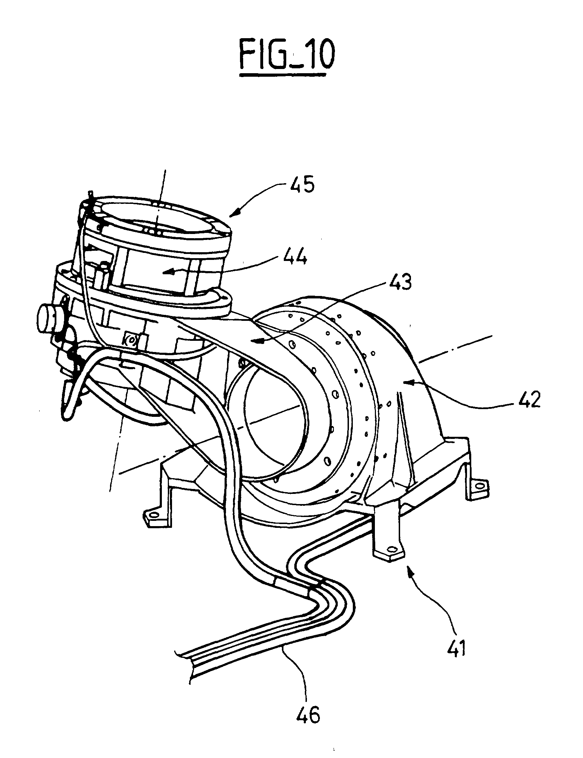

La figure 10 montre un mécanisme permettant la rotation autour de deux axes. Ce genre de mécanisme est bien connu de l'homme de l'art. Il comprend une première patte de fixation inférieure 41 contenant un moteur annulaire (non-montré) permettant d'obtenir une rotation autour d'un premier axe 42 d'une deuxième patte intermédiaire 43 contenant un deuxième moteur annulaire (non-montré) permettant d'obtenir une deuxième rotation autour d'un deuxième axe 44 d'une troisième patte d'interface avec l'équipement à tourner. Le cablage 46 permet de véhiculer des signaux de télémesure de la position des deux moteurs, ainsi que l'alimentation nécessaire pour obtenir leur rotation. Un tel mécanisme à deux axes installé entre la structure du satellite 10 et les radiateurs dépoyables ou au sein du radiateur déployable (interface bras de déploiement - panneaux radiatifs) permet d'obtenir un produit scalaire n.s nul sur toute l'orbite O.

L'invention décrite à l'aide de ces quelques exemples de réalisation et leurs figures explicatives n'est nullement limitée à ces exemples spécifiques. Par exemple, la forme des radiateurs montrée est en forme d'un « L », mais on pourrait facilement imaginer d'autres formes pour obtenir un agencement optimal sur l'engin, par exemple une forme triangulaire ou autre. L'agencement des radiateurs a été illustré sur les bords de la structure du satellite, ou sur la face anti-terre en position déployée, mais on peut facilement imaginer de les positionner ailleurs sur la structure de l'engin. Les exemples donnés concernent principalement des satellites, mais peuvent également concerner les sondes interplanétaires, les vols habités, ou tout autre engin spatial nécessitant une capacité complémentaire de rejet thermique.

## Revendications

1. Engin spatial (10), comprenant au moins un radiateur déployable (5) ayant une position stockée avant déploiement et une position déployée opérationnelle après déploiement ; ledit radiateur (5) ayant deux faces principales, dont une première face qui est stockée vers l'engin, et une deuxième face opposée qui est orientée vers l'espace en position stockée ; ladite première face étant radiante au moins pour la majeur partie de sa surface ; au moins une partie (5I) de ladite deuxième face étant thermiquement isolante ; **caractérisé en ce qu'**une partie importante de ladite deuxième face est thermiquement radiante, cette partie étant substantiellement cachée, avant le déploiement dudit radiateur (5), par d'autres éléments (18) dudit engin spatial (10) faisant écran lors du lancement et d'au moins une partie du trajet de transfert dudit engin (10) vers sa position orbitale opérationnelle.

2. Engin spatial (10) selon la revendication 1, ledit radiateur déployable (5) étant relié à la structure de l'engin (10) par un mécanisme de déploiement ayant une charnière (6) et un axe de charnière ; **caractérisé en ce que** ledit axe est positionné avec un angle non nul par rapport aux axes principaux de la structure dudit engin.

3. Engin spatial (10) selon la revendication 2, **caractérisé en ce que ladite** charnière (6) est fixée sur une partie (16) dudit engin spatial (10) dite « module de communication ».

4. Engin spatial (10) selon la revendication 2, **caractérisé en ce que** ladite charnière (6) est fixée sur une partie (16) dudit engin spatial (10) dite « module de service ».

5. Engin spatial (10) selon la revendication 2, **caractérisé en ce que** ledit radiateur (5) possède, en position déployée établie, au moins un degré de liberté autour d'au moins un axe.

6. Engin spatial (10) selon la revendication 5, **caractérisé en ce que** ledit radiateur (5) possède, en position déployée établie, au moins deux degrés de liberté autour d'au moins deux axes.

7. Engin spatial (10) selon l'une quelconque des revendications précédentes caractérisé en ce l'axe principal dudit radiateur (5) en position déployée n'est pas parallèle à un axe principale dudit engin (10).

8. Engin spatial (10) selon l'une quelconque des revendications précédentes caractérisé en ce le plan principal dudit radiateur (5) en position déployée n'est pas parallèle à un plan principale dudit engin (10).

## Patentansprüche

1. , Raumfahrzeug (10) mit mindestens einem ausklappbaren Kühler (5), der vor dem Ausklappen eine Ruheposition und nach dem Ausklappen eine ausgeklappte Arbeitsposition einnimmt; der genannte Kühler (5) verfügt über zwei Hauptflächen, wobei eine erste Fläche in Ruhestellung an das Raumfahrzeug angelegt ist, eine zweite, entgegen gesetzte Fläche in Ruhestellung zum All weist, die genannte erste Fläche zumindest in dem größten Teil ihrer Oberfläche abstrahlend ist und zumindest ein Teil (5l) der genannten zweiten Fläche wärme gedämmt ist, **dadurch gekennzeichnet, dass** ein wesentlicher Teil der genannten zweiten Fläche Wärme abstrahlt und vor dem Ausklappen des genannten Kühlers (5) durch andere Elemente (18) des genannten Raumfahrzeuges (10), die beim Start und zumindest während eines Teils der Übergangsbahn des genannten Raumfahrzeuges (10) in seine orbitale Arbeitsposition eine Abschirmung bilden, im Wesentlichen verdeckt ist.

2. Raumfahrzeug (10) gemäß Anspruch 1, wobei der genannte ausklappbare Kühler (5) durch einen Ausklappmechanismus, der über ein Scharnier (6) und eine Scharnierachse verfügt, mit der Struktur des Raumfahrzeuges (10) verbunden ist, **dadurch gekennzeichnet, dass** die genannte Achse in einem Winkel, der nicht null beträgt, in Bezug auf die Hauptachsen der Struktur des genannten Raumfahrzeuges ausgerichtet ist.

3. Raumfahrzeug (10) gemäß Anspruch 2, **dadurch gekennzeichnet, dass** das genannte Scharnier (6) an einem als "Kommunikationsmodul" bezeichneten Teil (16) des genannten Raumfahrzeuges (10) befestigt ist.

4. Raumfahrzeug (10) gemäß Anspruch 2, **dadurch gekennzeichnet, dass** das genannte Scharnier (6) an einem als "Bedienungsmodul" bezeichneten Teil (16) des genannten Raumfahrzeuges (10) befestigt ist.

5. Raumfahrzeug (10) gemäß Anspruch 2, **dadurch gekennzeichnet, dass** der genannte Kühler (5) in ausgeklappter Position über mindestens einen Freiheitsgrad um mindestens eine Achse herum verfügt.

6. Raumfahrzeug (10) gemäß Anspruch 5, **dadurch gekennzeichnet, dass** der genannte Kühler (5) in ausgeklappter Position über mindestens zwei Freiheitsgrade um mindestens zwei Achsen herum verfügt.

7. Raumfahrzeug (10) gemäß einem der vorstehenden Ansprüche, **dadurch gekennzeichnet, dass** die Hauptachse des genannten Kühlers (5) in ausgeklappter Position nicht parallel zu einer Hauptachse des genannten Raumfahrzeuges (10) ist.

8. Raumfahrzeug (10) gemäß einem der vorstehenden Ansprüche, **dadurch gekennzeichnet, dass** die Hauptebene des genannten Kühlers (5) in ausgeklappter Position nicht parallel zu einer Hauptachse des genannten Raumfahrzeuges (10) ist.

## Claims

1. A space vehicle (10) including at least one deployable radiator (5)-having a stored position prior to deployment and an operational deployed position after deployment; said radiator (5) having two main faces comprising a first face which is stored towards the vehicle and an opposite, second face which faces towards space in the stored position; said first face being radiating over at least the major portion of its area; at least a portion (5l) of said second face being thermally insulating; the radiator being **characterized in that** a large portion of said second face is thermally radiating, said portion being substantially hidden prior to deployment of said radiator (5) by other elements (18) of said space vehicle (10) that act as a screen during launch and during at least a portion of the transfer of said vehicle (10) into its operational orbital position.

2. A space vehicle (10) according to claim 1, said deployable radiator (5) being connected to the structure of the vehicle (10) by a deployment mechanism having a hinge (6) with a hinge axis, the radiator being **characterized in that** said axis is positioned at a non-zero angle relative to the main axes of the structure of said vehicle.

3. A space vehicle (10) according to claim 2, **characterized in that** said hinge (6) is fixed on a portion (16) of said space vehicle (10) referred to as a "communications module".

4. A space vehicle (10) according to claim 2, **characterized in that** said hinge (6) is fixed on a portion (16) of said space vehicle (10) referred to as a "service module".

5. A space vehicle (10) according to claim 2, **characterized in that** said radiator (5), in the established deployed position, possesses at least one degree of freedom about at least one axis.

6. A space vehicle (10) according to claim 5, **characterized in that** said radiator (5), in the established deployed position, possesses at least two degrees of freedom about at least two axes.

7. A space vehicle (10) according to any preceding claim, **characterized in that** the main axis of said radiator (5) in the deployed position is not parallel to a main axis of said vehicle (10).

8. A space vehicle (10) according to any preceding claim, **characterized in that** the main plane of said radiator (5) in the deployed position is not parallel to a main plane of said vehicle (10).
